# EUROPÄISCHE PATENTSCHRIFT

(11) **EP 1 026 925 B1**
(45) Veröffentlichungstag und Bekanntmachung des Hinweises auf die Patenterteilung: **13.10.2004**
(21) Anmeldenummer: 00101957.9
(22) Anmeldetag: 01.02.2000
(51) Int. Cl.: H05B 39/04

(54) **Elektronischer Transformator zum Betreiben einer Last**
Electronic transformer for powering a load
Transformateur électronique pour alimenter une charge

(30) Priorität: 01.02.1999 DE 19903904
(43) Veröffentlichungstag der Anmeldung: 09.08.2000
(73) Patentinhaber: TridonicAtco GmbH & Co. KG, 6851 Dornbirn (AT)
(72) Erfinder: Spechtenhauser, Reinhard, 6845 Hohenems (AT)
(74) Vertreter: Rupp, Christian, Dipl.-Phys.

(56) Entgegenhaltungen:
- EP-A- 0 264 765
- DE-A- 4 418 886
- DE-A- 19 543 720

## Beschreibung

Die Erfindung betrifft einen elektronischen Transformator zum Betreiben einer Last, insbesondere einer Niedervolt-Halogenglühlampe.

Halogen-Glühlampen können grundsätzlich auch mit konventionellen Transformatoren betrieben werden, die mit Netzfrequenz arbeiten. Die Motivation für den Einsatz von elektronischen Transformatoren resultiert aus den Möglichkeiten, die sich aus der Anwendung elektronischer Schaltungen ergeben. Dies sind insbesondere die Verringerung des Bauvolumens, die Freiheit in den Abmessungen, Verbesserungen in der Lastabhängigkeit sowie die erweiterten Möglichkeiten zum Dimmen.

Elektronische Transformatoren enthalten normalerweise einen Netzgleichrichter, d.h, sie richten die Netzspannung gleich (normalerweise ohne sie zu Glätten). Danach werden die so entstehenden Halbwellen mit einer Frequenz zerhackt, die erheblich höher liegt als die Netzfrequenz. Typischerweise liegt die Zerhackerfrequenz zwischen 20 und 50 kHz. Das Zerhacken erfolgt in einem Wechselrichter, der meistens von einer Brückenschaltung mit zwei Brückenzweigen gebildet ist. Die beiden Brückenzweige liegen zwischen den von dem Gleichrichter bereitgestellten unterschiedlichen Gleichspannungspotentialen. Der eine Brückenzweig besteht normalerweise aus zwei in Serie geschalteten elektronischen Schalterelementen, wie bipolare Transistoren oder FET's. Der andere Brückenzweig wird in der Regel von zwei in Serie geschalteten passiven elektronischen Bauelementen, wie Kondensatoren, Spulen oder Widerständen gebildet. Zwischen dem Verbindungspunkt der Schalterelemente in dem einen Brückenzweig einerseits und dem Verbindungspunkt der passiven Bauelemente in dem anderen Brückenzweig andererseits ist die Primärseite eines konventionellen Übertragers geschaltet, an dessen Sekundärseite die Last anzuschließen ist. Da der Übertrager in der Brückendiagnoalen liegt, ist sein Ausgang symmetrisch zu den von dem Gleichrichter erzeugten Gleichspannungspotentialen, d.h. keiner der beiden Ausgangsanschlüsse liegt auf einem der beiden Gleichspannungspotenatiale. Die an der Primärseite des Übertragers anliegende Spannung besteht aus Impulsen mit der Zerhackerfrequenz. Da diese Frequenz - wie vorstehend dargelegt - relativ hoch ist, kann der Übertrager entsprechend kleine Abmessungen haben.

Die zerhackte gleichgerichtete Gleichspannung setzt sich nach der Fourier-Theorie u.a. aus zahlreichen Oberwellen der Netzfrequenz und der Zerhackerfrequenz zusammen. Die Oberwellen verursachen - wenn nicht entsprechende Gegenmaßnahmen getroffen werden - erhebliche Störungen im Funkbereich. Um die Funkstörungen in Grenzen zu halten, wurden entsprechende Normen geschaffen, die auch elektronische Transformatoren betreffen.

Funkstörungen verursachende Oberwellen können bei elektronischen Transformatoren einerseits ins Netz abgegeben werden; andererseits besteht aber auch die Gefahr, daß Sie an der Ausgangsseite abgestrahlt werden, d.h. also dort, wo die Last bzw. die Halogen-Niedervolt-Lampe mit der Sekundärseite des Übertragers verbunden ist. Letzteres gilt insbesondere dann, wenn die Halogen-Niedervoltlampe an frei verspannten Drähten aufgehängt ist. Die Drähte wirken dann wie eine Antenne.

Eine Rückstrahlung von Oberwellen ins Netz über die Eingangsseite des elektronischen Transformators wird in der Regel mit einem Eingangsfilter bekämpft, das dem Gleichrichter vorgeschaltet ist. Gegenstand der vorliegenden Erfindung sind dagegen Maßnahmen, die eine Störstrahlungsunterdrückung am Ausgang des elektronischen Transformators betreffen.

Zur Reduzierung der ausgangsseitigen Störstrahlungen wird in der EP 0 707 435 vorgeschlagen, die Sekundärwicklung des Übertragers mit einem Symmetriernetzwerk zu überbrücken, welches aus einem oder mehreren der Bauelemente, Kondensator, Widerstand und Spule oder aus einer Kombination dieser Bauelemente aufgebaut ist. Das Symmetriernetzwerk ist außerdem mit dem einen Anschluß einer HF-Kurzschlußschaltung verbunden, deren anderer Anschluß auf einem HF-Bezugspotential liegt.

Die DE 197 02 343 A1 der Anmelderin betrifft eine Weiterbildung der in der EP 0 707 435 A2 vorgeschlagenen Maßnahme zur Funkentstörung. Diese Weiterbildung besteht darin, daß die Kurzschlußschaltung mit einem Mittelabgriff der Sekundärentwicklung des Übertragers verbunden werden soll.

Ferner ist nach der EP 0 264 765 A2 ein elektronischer Transformator bekannt, mit dem bei Anschluß an herkömmliche Dimmer-Schalter mit Phasenanschnittsteuerung ein optimaler Betrieb der Lampe, insbesondere auch bei niedrigen Helligkeitsstufen möglich sein soll. Hier ist die Sekundärseite des Transformators über einen Kondensator mit dem Plus-oder Minuspol des Netzgleichrichters verbunden. Mit anderen Worten, der Kondensator liegt zwischen einem Anschluß der Sekundärwicklung und einem der beiden am Ausgang des Gleichrichters zur Verfügung gestellten Gleichspannungspotentionalen. Die Druckschrift beschäftigt sich allerdings nicht mit dem Problem der Funkentstörung, und es ist auch nicht gesagt, welchen Zweck der erwähnte Kondensator hat.

Der Erfindung liegt die Aufgabe zugrunde, die ausgangsseitige Funkentstörung bei einem elektronischen Transformator der zuletzt eschriebenen Art, die dem Oberbegriff des Anspruches 1 entspricht, weiter zu verbessern.

Die Aufgabe ist erfindungsgemäß durch das im Kennzeichen des Anspruches 1 angegebene Merkmal gelöst.

Eine zweckmäßige Ausgestaltung des Wechselrichters ist im Anspruch 2 angegeben.

Die erfindungsgemäße Lösung ist besonders vorteilhaft für elektronische Transformatoren, bei denen die elektronischen Schalterelemente des Wechselrichters fremdgesteuert sind. Bei diesen sind die Flanken beim Umschalten steiler und die Funkentstörproblematik größer als bei selbstschwingenden Wechselrichtern, wie sie beispielsweise in der EP 0 264 765 A2 beschrieben sind.

Der zweite Kondensator verbessert die Funkentstörung um ca. -10 dB. Überraschend ist, daß sich die Funkentstörung auch beim Einsatz in metallischen Leuchten nicht verschlechtert (üblicherweise liegt die Verschlechterung im Bereich von 10-15 dB). Unter "metallischen Leuchten" sind Leuchten mit einem geerdeten metallischen Gehäuse zu verstehen. In diese wird ein nicht geerdeter elektronischer Transformator, der in einem Kunststoffgehäuse gekapselt ist, eingebaut.

Die erfindungsgemäße Maßnahme zur Reduzierung von Funkstörungen kann ferner dadurch verbessert werden, daß die Sekundärseite des Übertragers aus zwei parallel geschalteten Teilwicklungen besteht, wie dies bereits in der DE 197 02 343 A1 der Anmelderin vorgeschlagen wurde.

Ausführungsbeispiele der Erfindung werden nachfolgen anhand der Zeichnung beschrieben.

Es zeigen:
- Fig. 1: ein schematisiertes Schaltbild eines elektronischen Transformators mit einer Ausführungsform der erfindungsgemäß vorgeschlagenen Maßnahme zur Funkentstörung;
- Fig. 2: den relevanten Teil des Wechselrichters aus Fig. 1 mit einer modifizierten Ausführungsform der erfindungsgemäßen Maßnahme zur Funkentstörung und
- Fig. 3: den relevanten Teil des Wechselrichters aus Fig. 1 mit einer dritten Ausführungsform der erfindungsgemäßen Maßnahme zur Funkentstörung.

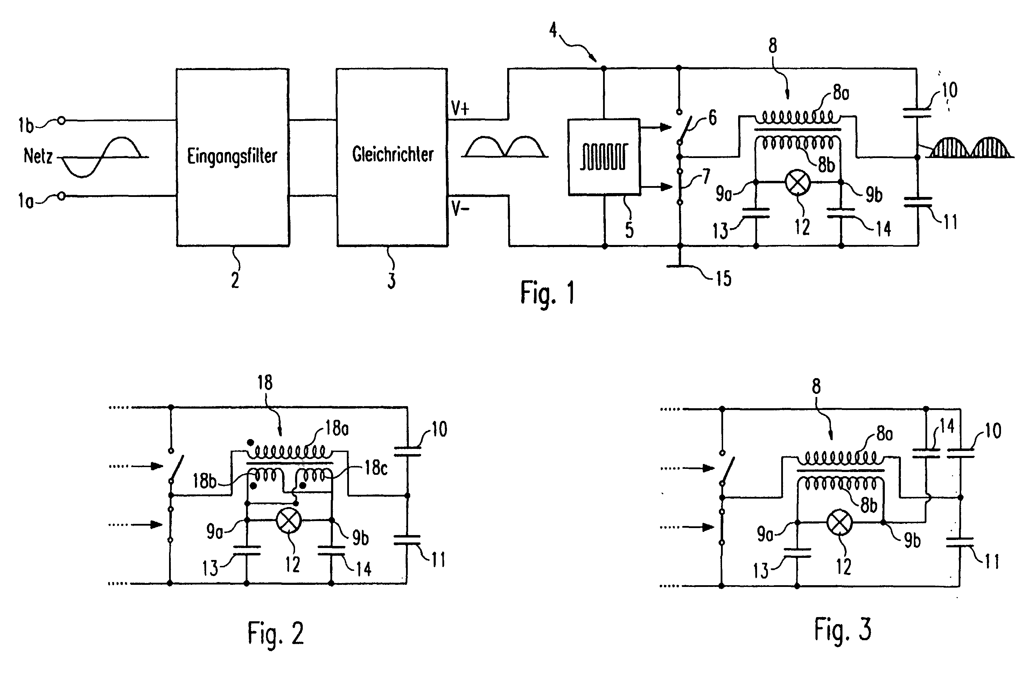

Der elektronische Transformator gemäß Fig. 1 hat zwei Eingangsanschlüsse 1a, 1b, die an das Netz anzuschließen sind. Die Netzspannung wird einem Gleichrichter 3 über ein Eingangsfilter 2 zugeführt, dessen Aufgabe es ist, in das Netz zurückgestrahlte Funkstörungen soweit zu reduzieren, daß sie unterhalb der vorgeschriebenen Norm liegen.

Der Gleichrichter 3 stellt an seinem Ausgang zwei Gleichspannungspotentiale V+, V-zur Verfügung. Es handelt sich hierbei um die gleichgerichteten Netzhalbwellen.

An den Gleichrichter 3 schließt sich ein Wechselrichter 4 an. Dieser enthält zwei parallel geschaltete Brückenzweige, die zwischen den beiden Gleichspannungspotentialen V+ und V- liegen. Der erste Brückenzweig besteht aus zwei in Serie geschalteten elektronischen Schaltern 6,7, die beispielsweise von bipolaren Transistoren oder FET's gebildet sein können. Der zweite Brückenzweig ist von zwei in Serie liegenden Kondensatoren 10, 11 gebildet. Die beiden elektronischen Schalter werden von einem Generator 5 fremdgesteuert. Der Generator 5 erzeugt eine Zerhackerfrequenz, die wesentlich über der Netzfrequenz liegt, beispielsweise zwischen 20 und 50 kHz. Dadurch entsteht am Verbindungspunkt der beiden Kondensatoren 10, 11 eine pulsierende Gleichspannung, wobei die Pulsfrequenz der Zerhackerfrequenz entspricht und die Füllkurve den gleichgerichteten Netzhalbwellen.

Zwischen die Verbindungspunkte der elektronischen Schalter 6,7 einerseits und die Verbindungspunkte der beiden Kondensatoren 10,11 andererseits ist die Primärseite 8a eines konventionellen Übertragers 8 geschaltet. Die Sekundärseite 8b des Übertragers 8 bildet mit den Ausgangsanschlüssen 9a, 9b den Ausgang des elektronischen Transformators, an den die Niedervolt-Halogenglühlampe 12 anzuschließen ist.

Mit den beiden Ausgangsanschlüssen 9a, 9b ist jeweils die eine Seite eines Kondensators 13,14 verbunden. Die andere Seite der beiden Kondensatoren 13,14 liegt an dem Gleichspannungspotential V-. Letzeres kann mit der Masse 15 des Gehäuses verbunden sein. Es ist aber auch möglich, den elektronischen Transformator in einem Kunststoffgehäuse unterzubringen, so daß ein Masse-Anschluß entfällt.

Die beiden Kondensatoren 13,14 wirken zusammen, und es wird eine um -10 dB bessere Funkentstörung erreicht als mit nur einem Kondensator.

Die in Fig. 2 gezeigte Variante unterscheidet sich von der in Fig. 1 gezeigten Schaltung lediglich dadurch, daß hier ein Übertrager 18 verwendet ist, der wiederum eine Primärwicklung 18a, aber zwei Sekundärwicklungen 18b, 18c hat. Die beiden Sekundärwicklungen 18b, 18c haben gleichen Wicklungssinn und sind parallel geschaltet. Mit dieser Maßnahme wird eine zusätzliche Verbesserung der Funkentstörung erreicht.

In Fig. 3 ist der Übertrager 8 so gestaltet wie in Fig. 1. Der Unterschied gegenüber Fig. 1 besteht lediglich darin, daß der Funkentstörkondensator 14 hier nicht an das negative Gleichspannungspotential V- bzw. Masse geschaltet ist, sondern an das positive Gleichspannungspotential V+.

Es sei hinzugefügt, daß - was nicht dargestellt ist - auch der Kondensator 13 an das positive Gleichspannungspotential angeschaltet werden kann. Darüber hinaus ist es auch möglich, daß der Kondensator 14 mit dem negativen Gleichspannungspotential V- bzw. Masse verbunden ist, während der Kondensator 13 mit dem positiven Gleichspannungspotential V+ verbunden ist.

## Patentansprüche

1. Elektronischer Transformator zum Betreiben einer Glühlampe, insbesondere einer Niedervolt-Halogenglühlampe (12), mit einem an das Netz anzuschließenden Gleichrichter (3), der an seinem Ausgang zwei unterschiedliche Gleichspannungspotentiale (V+, V-) bereitstellt, einem dem Gleichrichter (3) nachgeschalteten Wechselrichter (4) mit elektronischen Schalterelementen (6,7), und einem von dem Wechselrichter (4) gespeisten Übertrager (8,18), dessen Sekundärseite (8b,18b,18c) symmetrisch zu den Gleichspannungspotentialen (V+, V-) liegt und zwei Ausgangsanschlüsse (9a,9b) zum Anschließen der Glühlampe (12) hat, wobei ein Ausgangsanschluß (9a) über einen ersten Kondensator (13) mit einem der beiden Gleichspannungspotentiale (V+, V-) verbunden ist,
**dadurch gekennzeichnet,**
**daß** auch der andere Ausgangsanschluß (9b) der Sekundärseite (8a,8b,18a,18b,18c) des Übertragers (8,18) über einen zweiten Kondensator (14) mit einem der beiden Gleichspannungspotentiale (V+,V-) verbunden ist.

2. Elektronischer Transformator nach Anspruch 1,
**dadurch gekennzeichnet,**
**daß** der Wechselrichter (4) als Brückenschaltung mit zwei zwischen die beiden Gleichspannungspotentiale (V+ V-) geschalteten parallelen Brückenzweigen ausgebildet ist,
wobei der eine Brückenzweig von zwei in Serie liegenden und im Gegentakt geschalteten elektronischen Schalterelementen (6,7) und der andere Brückenzweig von zwei in Serie liegenden elektronischen Symmetrier-Elementen (10,11) gebildet ist, und wobei die Primärseite (8a,18a) des Übertragers (8,18) zwischen dem Verbindungspunkt der Schalterelemente (6,7) einerseits und dem Verbindungspunkt der Symmetrie-Elemente (10,11) andererseits liegt.

3. Elektronischer Transformator nach Anspruch 2,
**dadurch gekennzeichnet,**
**daß** die elektronischen Schalterelemente (6,7) des Wechselrichters fremdgesteuert sind.

4. Elektronischer Transformator nach einem der vorhergehenden Ansprüche,
**dadurch gekennzeichnet,**
**daß** die Sekundärseite des Übertragers (18) aus zwei parallel geschalteten Teilwicklungen (18b,18c) besteht.

5. Elektronischer Transformator nach einem der Ansprüche 2 bis 4,
**dadurch gekennzeichnet,**
**daß** die Symmetrier-Elemente weitere Kondensatoren (10,11) sind.

## Claims

1. Electronic transformer for operating an incandescent lamp, in particular a low voltage halogen incandescent lamp (12), having a rectifier (3) for connection to the mains, which makes available at its output two different d.c. voltage potentials (V+, V-), an inverter (4) connected downstream of the rectifier (3) having electronic switch elements (6, 7), and a transformer (8, 18) fed from the inverter (4), the secondary side (8b, 18b, 18c) of which transformer lies symmetrically with respect to the d.c. voltage potentials (V+, V-) and which has two output terminals (9a, 9b) for connection of the incandescent lamp (12), one output terminal (9a) being connected with one of the two d.c. voltage potentials (V+, V-) via a first capacitor (13),
**characterized in that**,
also the other output terminal (9b) of the secondary side (8a, 8b, 18a, 18b, 18c) of the transformer (8, 18) is connected with one of the two d.c. voltage potentials (+V. - V) via a second capacitor (14).

2. Electronic transformer according to claim 1,
**characterized in that**,
the inverter (4) is constituted as a bridge circuit with two parallel bridge branches connected between the two d.c. voltage potentials (V+, V-),
the one bridge branch being constituted by two electronic switch elements (6, 7) lying in series and switched in a push-pull manner, and the other bridge branch being constituted by two electronic symmetrization elements (10, 11) lying in series, and the primary side (8a, 18a) of the transformer (8, 18) lying between the connection point of the switch elements (6, 7), on the one hand, and the connection point of the symmetrization elements (10, 11) on the other hand.

3. Electronic transformer according to claim 2,
**characterized in that**,
the electronic switch elements (6, 7) of the inverter are externally controlled.

4. Electronic transformer according to any preceding claim,
**characterized in that**,
the secondary side of the transformer (18) is of two part windings (18b, 18c) connected in parallel.

5. Electronic transformer according to any of claims 2 to 4,
**characterized in that**,
the symmetrization elements are further capacitors (10, 11).

## Revendications

1. Transformateur électronique pour alimenter une lampe à incandescence, en particulier une lampe halogène basse tension (12), comportant un redresseur (3) destiné à être connecté au réseau et fournissant deux tensions continues différentes (V+, V-) en sortie, un onduleur (4), connecté en aval du redresseur (3) et comportant des éléments de commutation électroniques (6, 7) et un transducteur (8, 18), alimenté par l'onduleur et dont le secondaire (8b, 18b, 18c) est symétrique par rapport aux tensions continues (V+, V-) et comporte deux bornes de sortie (9a, 9b) pour la connexion de la lampe à incandescence (12), une des bornes de sortie (9a) étant connectée à l'une des tensions continues (V+, V-) par l'intermédiaire d'un premier condensateur (13), transformateur **caractérisé en ce que** l'autre borne de sortie (9b) du secondaire (8a, 8b, 18a, 18b, 18c) du transducteur (8, 18) est également connectée à l'une des tensions continues (V+, V-) par l'intermédiaire d'un second condensateur (14)

2. Transformateur électronique selon la revendication 1, **caractérisé en ce que** l'onduleur (4) est constitué par un circuit en pont avec deux branches du pont connectées en parallèle entre les deux tensions continues (V+, V-), l'une des branches du pont étant constituée par deux éléments de commutation électroniques (6, 7), disposés en série et commutés en opposition, et l'autre branche du pont étant constituée par deux éléments de symétrisation (10, 11) disposés en série, le primaire (8a, 18a) du transducteur (8, 18) étant disposé entre le point commun des éléments de commutation (6, 7), d'une part, et le point commun des éléments de symétrisation (10, 11), d'autre part.

3. Transformateur électronique selon la revendication 2, **caractérisé en ce que** les éléments de commutation électroniques (6, 7) de l'onduleur sont contrôlés par l'extérieur.

4. Transformateur électronique selon l'une quelconque des revendications précédentes, **caractérisé en ce que** le secondaire du transducteur (18) est constitué par deux enroulements partiels (18b, 18c) connectées en parallèle.

5. Transformateur électronique selon l'une des revendications 2 à 4, **caractérisé en ce que** les éléments de symétrisation sont des condensateurs additionnels (10, 11).
